# EUROPÄISCHE PATENTSCHRIFT

(11) **EP 3 422 843 B1**
(45) Veröffentlichungstag und Bekanntmachung des Hinweises auf die Patenterteilung: **18.12.2019**
(21) Anmeldenummer: 17711067.3
(22) Anmeldetag: 23.02.2017
(51) Int. Cl.: A01K 15/02

(54) **SPIELZEUG FÜR TIERE, INSBESONDERE HUNDE**
TOY FOR ANIMALS, IN PARTICULAR DOGS
JOUET POUR ANIMAUX, EN PARTICULIER POUR CHIENS

(30) Priorität: 04.03.2016 AT 501742016
(43) Veröffentlichungstag der Anmeldung: 09.01.2019
(73) Patentinhaber: Citak, Andrzej, 2281 Raasdorf (AT)
(72) Erfinder: Citak, Andrzej, 2281 Raasdorf (AT)
(74) Vertreter: Wildhack & Jellinek
(86) Internationale Anmeldenummer: PCT/AT2017/060044
(87) Internationale Veröffentlichungsnummer: WO 2017/147633

(56) Entgegenhaltungen:
- CN-U- 202 190 625
- GB-A- 2 488 379
- US-A- 4 108 517
- US-A- 4 574 822

## Beschreibung

Die vorliegende Erfindung betrifft ein neues Spielzeug zur Förderung der natürlichen Instinkte, wie insbesondere Geruchssinn und Neugierde sowie der Intelligenz von Tieren, insbesondere von Hunden, umfassend einen Korpus, in den kleinstückige, wohlschmeckende, fressbare Belohnungen für den Hund, so genannte "Leckerlis" einbringbar sind.

Es sind schon die unterschiedlichsten Such- und Find-Spielzeuge für Tiere, insbesondere für Hunde, bekannt geworden, die das Tier spielerisch beschäftigen und zusätzlich einen aufsteigenden Lern- bzw. Trainingseffekt bewirken können. Solche Spielzeuge sind meist relativ einfach gebaut und belohnen das Tier, wenn es erfolgreich ist, mit einer fressbaren Belohnung, meist in Form von kleinen Lerckerbissen ("Leckerlis"). Die üblicherweise im Handel erhältlichen bekannten derartigen Spielzeuge sind meist direkt und gemäß einfachem Trial- und- Error Prinzip schaffbar, halten jedoch den Lerneffekt für das Tier in engen Grenzen. Üblicherweise ermöglichen bekannte Spielzeuge praktisch keine oder ganz wenige Spiel-Variationen, welche für das Tier über längere Zeit nicht von Interesse sind, sodass das Spielzeug nur für kurze Zeit "bespielt" wird.

Was den Stand der Technik auf diesem Gebiet betrifft, so ist hiezu folgendes auszuführen:
In der CN 202190625U ist ein Hundespielzeug beschrieben, welches einen Korpus mit einer Grundplatte mit Ausnehmungen umfasst, unterhalb welcher sich ein von derselben beabstandeter Boden befindet, auf welchem kleinstückige, vom Hund geschätzte Fressbelohnungen ("Leckerlies") angeordnet sind.

In zwei einander gegenüberliegenden Führungskanälen sind die Ausnehmungen im Wesentlichen abdeckende längs aneinanderliegend angeordnete Stäbe, Stangen oder Walzen angeordnet, welchen von dem die Fressbelohnung riechenden Hund unter Freilegung zumindest einer Ausnehmung verschoben werden können, sodass der Hund die Fressbelohnung aufnehmen kann.

Die US 4108517B beschreibt ein Schreibpult mit einem in zueinander parallelen Führungsrinnen verschiebbaren längs aneinanderliegenden Stäben gebildeten Rollbalkenverschlussorgan.

Ein ähnliches Verschlussorgan weist auch das Babyspielzeug gemäß US 4574822 auf.

Der GB 2488379A ist ein stufentempelartiges Hundetrainingsspielzeug mit einer Mehrzahl von zweigeteilten Wannen mit verschieblichen Deckeln und nach Verschub zugänglicher Fressbelohnung beschrieben.

Aufgabe und Ziel der vorliegenden Erfindung ist es, ein neues Spielzeug für Hunde zu schaffen, das die oben genannten Nachteile bisher bekannter Spielzeuge nicht aufweist und das Interesse des Hundes über längere Zeit aufrechthält und darüber hinaus einen hohen und meist auch steigenden Lerneffekt gewährleistet.

Gegenstand der Erfindung ist nun ein Spielzeug der eingangs genannten Art, wobei
- auf einer ebenen Grundplatte ein hohler, mit Platten gebildeter Prismenkörper mit im Wesentlichen dreieck-, trapez- oder zylindersegment-förmigem Querschnitt angeordnet ist, dessen von der Grundplatte schräg aufsteigenden Mantelplatten und dessen Scheitelplatte oder Mantelplattenabschnitte jeweils mit zumindest einer dieselben durchsetzenden Ausnehmung ausgebildet sind, unterhalb welcher sich eine von ihr beabstandete Auflagefläche bzw. ein derartiger Boden od. dgl. befindet, auf welcher bzw. welchem eine vom Hund geschätzte und erreichbare Fressbelohnung ("Leckerli") platzierbar ist, dass
- der Prismenkörper beidseitig durch vertikale, zueinander parallele, dessen Mantelplatten oder Mantelplattenabschnitte mit durchgehend konstanter Überstands-Höhe überragende Flankenplatten begrenzt ist, deren einander zugekehrte Überstands-Innenflächen jeweils mit einem zumindest im Wesentlichen dem Verlauf der Außenfläche der Mantelplatten bzw. der Mantelplattenabschnitte folgenden Führungskanal ausgestattet ist, in welche beiden Führungskanälen, jeweils mit ihren beiden Endbereichen hinein ragend, eine Mehrzahl von - eine/n der Mantelplatten und Scheitelplatte oder Mantelplattenabschnitte und hiermit die dort vorhandene zumindest eine Ausnehmung im Wesentlichen abdeckenden - , längs aneinander liegend angeordneten Stäbe, Stangen oder Walzen, angeordnet sind, welche von dem die Fressbelohnung riechenden Hund einzeln oder zu mehrt unter Freilegung der zumindest einen Ausnehmung und der dadurch zugänglich gemachten, sich darunter befindlichen Fressbelohnung über die den Scheitel des Prismenkörpers bildende Mantelplatte, also über die Scheitelplatte oder den Scheitelplattenabschnitt hinweg auf bzw. über die/den jeweils andersseitige/n Mantelplatten oder Mantelplattenabschnitt verbringbar, insbesondere verschiebbar sind.
Was die oben allgemein als Führungskanäle bezeichneten Bestandteile des neuen Hundespielzeugs betrifft, so haben sich zwei Ausführungsarten derselben besonders bewährt.

Eine davon zeichnet sich dadurch aus, dass sie als jeweils in die Überstandsflächen der Flankenplatten eingetiefte, der Außenkontur der beiden Mantelplatten oder Mantelplattenabschnitte über die Scheitelplatte oder den Scheitelplattenabschnitt im Wesentlichen folgende, kontinuierliche Führungsrinnen ausgebildet sind, in welche mit ihren jeweils beiden Enden oder endständigen, insbesondere kreisrunden Querschnitt aufweisenden, Führungszapfen die Stäbe, Stangen, insbesondere Walzen ragen und darin führbar sind.

Die andere Ausführungsart ist dadurch gekennzeichnet, dass die beiden Führungskanäle mit den beiden einander zugekehrten Überstands-Innenflächen der Flankenplatten und den dieselben rand-begrenzenden, an die Außenränder der Flankenplatten angeschlossenen Deckstreifen mit Hintergreifungsprofilstreifen ausgebildet sind, und dass die Stäbe, Stangen, insbesondere Walzen an ihren beiden Enden mit jeweils in die so gebildeten Führungskanäle eingreifenden und sich direkt an der/den Mantelfläche/n des Prismenkörpers abstützenden, kreisrunden Endscheiben für ihre Führung ausgestattet sind.

Eine gewisse Spielerleichterung lässt sich insbesondere dadurch erreichen, dass die Führungskanäle bzw. Führungsrinnen für die Stäbe, Stangen, insbesondere Walzen beidseitig in einem Abstand von der Grundplatte endend ausgebildet sind, womit der/die jeweils unterste derselben in einem - vom das Spielzeug benutzenden Hund, beispielsweise mit seiner Pfote untergreifbaren - Abstand von der Grundplatte gehalten ist.

Eine gewisse höhere Einsicht des Hundes in die Funktion des neuen Spielzeugs lässt sich dadurch erzielen, dass die Stäbe, Stangen, insbesondere Walzen in einer Anzahl vorhanden sind, sodass sie bei Längs-Aneinanderliegen eine der beiden schrägen Prismenkörper-Mantelplatten bzw. Mantelplattenabschnitte und somit die dort jeweils vorhandenen Ausnehmungen im Wesentlichen abdecken.

Hierbei hat es sich besonders bewährt, wenn die Stäbe, Stangen, insbesondere Walzen selbst entweder kreisrunden oder mehr-, insbesondere zumindest achteckigen Querschnitt aufweisen.

Günstig ist es weiterhin, wenn dafür gesorgt ist, dass die Führungskanäle bzw. Führungsrinnen über ihren gesamten Verlauf gleichbleibende Breite, Tiefe und Querschnittsform aufweisen.

Hierbei ist es von besonderen Vorteil, wenn die Führungsrinnen im Wesentlichen Rechteck- oder etwa Halbkreisform aufweisenden Querschnitt besitzen.

Im Sinne der Erfindung ist es besonders bevorzugt, wenn das neue Hundespielzeug zusätzlich zumindest einen profilierten, bevorzugtenfalls mit einem ihn durchsetzenden achsialen Riechkanal ausgestatteten, Sperr- Zapfen bzw. -Knubbel umfasst, mittels welchem die zumindest eine eine Fressbelohnung beherbergende Ausnehmung in den Mantelplatten verschließbar ist und dadurch auch die Stäbe, Stangen oder Walzen verbringblockierbar, insbesondere verschiebeblockierbar sind, womit derselbe vom Hund zuerst zu entfernen ist, um danach die Stangen, Stäbe, insbesondere Walzen zur Freilegung der zumindest einen, eine Fressbelohnung enthaltenden Ausnehmung von ihr weg verschieben zu können.

Eine weitere Erhöhung der an den Hund bei Bemühung des neuen Spielzeug gestellten Ansprüche gewährleistet eine Ausführungs- Variation desselben, bei welcher es zusätzlich zwei, jeweils aus den Flankenplatten, beispielsweise mittels Schlaufe, herausziehbare, ebenfalls mit einer Fressbelohnung befüllbare Laden aufweist, welche mittels in Zapfen-Aufnahme-Ausnehmungen in der Grundplatte platzier- bzw. einsteckbaren und aus diesen lösbaren Sperr- Zapfen bzw. -Knubbeln blockierbar sind, wobei erst nach deren Entfernung durch den Hund die Laden herausziehbar sind und somit die darin gelagerte Fressbelohnung für denselben zugänglich ist.

Nicht zuletzt ist es, insbesondere, um die Bespielbarkeit des neuen Spielzeug in allen Variationen zu gewährleisten und insbesondere zu erhöhen, von Vorteil, dafür zu sorgen, dass die Zapfen-Aufnahme-Ausnehmungen in der Grundplatte, in der Scheitelplatte und/oder in den Flankenplatten mit Hinterschneidungen zum Festhalten der in dieselben eingreifenden Sperr-Zapfen bzw. -Knubbel ausgebildet sind, wobei jeweils nur ein begrenzter Bereich dieser Zapfen-Aufnahme-Ausnehmungen hinterschneidungsfrei ist, und erst nach Verschieben des Sperr-Zapfens bzw. - Knubbels dorthin, derselbe durch den Hund entfernbar und somit die jeweilige Lade aus der Flankenplatte herausziehbar und eine sich darin befindliche Fressbelohnung für denselben zugänglich ist.

Die Erfindung wird anhand der Zeichnung näher erläutert:

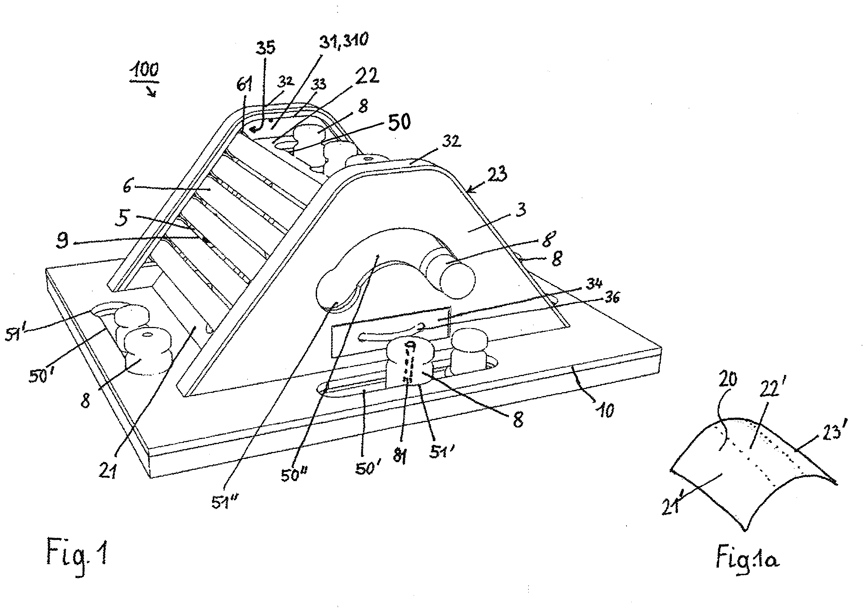

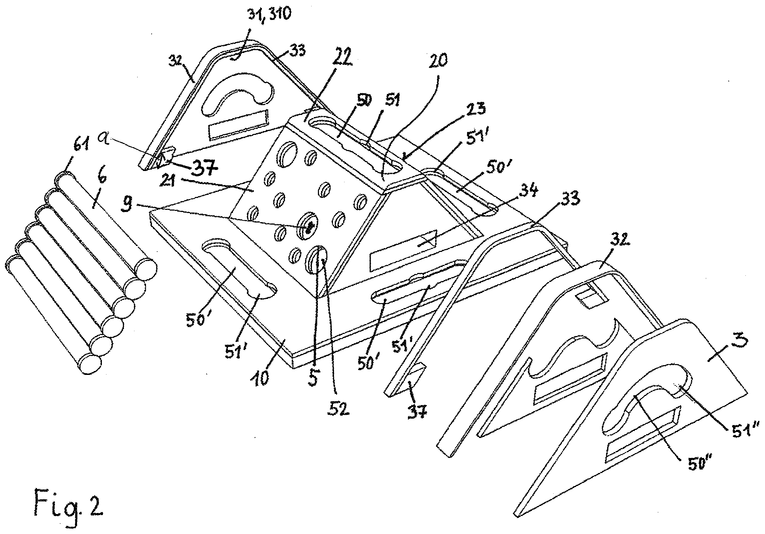

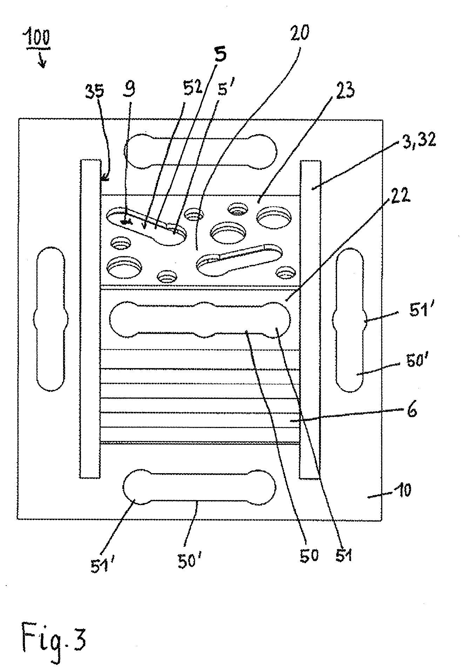

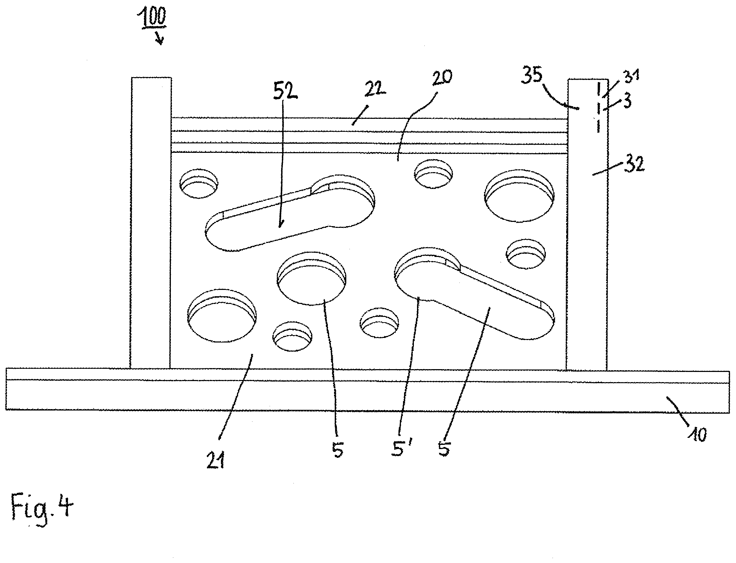

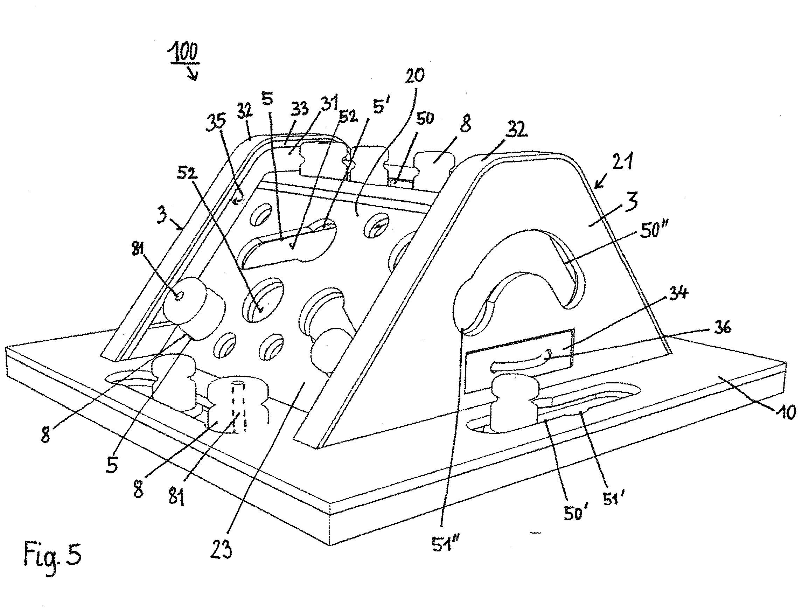

Die Fig. 1 zeigt das neue Hundespielzeug in Schrägansicht, die Skizze der Fig. 1a eine Variante des in Figur 1 gezeigten Spielzeugs, die Fig. 2 eine Explosionsdarstellung des Spielzeugs mit dessen Einzelteilen, die Fig. 3 eine Draufsicht auf dasselbe, die Fig. 4 eine Ansicht desselben von vorne und die Fig. 5 eine Ansicht des genannten Spielzeugs von der anderen Seite, wobei in zwei Ausnehmungen der vorderseitigen Mantelplatte jeweils ein Sperrknubbel eingesteckt ist.

Das in Fig. 1 gezeigte Spielzeug 100 umfasst im Wesentlichen einen auf einer Grundplatte 10 aufsitzenden Prismenkörper 20 mit symmetrisch trapezoidem Querschnitt. Der Mantel des Prismenkörpers 20 ist mit den beidseitig angeordneten, zur Grundplatte 10 hin in gleichen Winkeln schrägen Mantelplatten 21, 23 gebildet, welche durch eine parallel zur Grundplatte 10 angeordnete Scheitelplatte 22 miteinander verbunden sind, gebildet.

Diese beiden Mantelplatten 21, 23 weisen auf beiden Seiten des Prismenkörpers 20 Ausnehmungen 5 auf, welche auf der "vorderen" Mantelplatte 21 durch hier sechs gleichartige, im Wesentlichen bis auf schmale Schlitze längs aneinanderliegende Walzen 6 mit hier kreisförmigen Querschnitt fast vollständig abgedeckt sind. Über der anderen, also der zweiten schrägen Mantelplatte 23 und der Scheitelplatte 22 sind keine Walzen platziert.

Die Walzen 6 sind jeweils beidseitig mittels kreisrunden, sie rundum überragenden Endscheiben 61 ausgestattet und sind mit diesen Endscheiben 61 in den zwischen beiden Flankenplatten 10 vorhandenen einander zugekehrt angeordneten Führungskanälen 35 der Flankenplatten 2 "eingehängt" und in diesen führbar.

In den Führungskanälen 35, die im Wesentlichen dem Verlauf der Außenflächen der Mantelplatten 21, 23 und der Scheitelplatte 22 folgen und keine Unstetigkeiten aufweisen, sind die Walzen 6 einzeln oder zu mehrt von der Seite der Mantelplatte 21 über die Scheitelplatte 22 hinweg auf bzw. eigentlich über die sich auf der anderen Seite befindliche, in Fig. 1 als solche nicht direkt sichtbare Mantelplatte 23 verschiebbar, wobei sie dort schwerkraftbedingt von selbst abrollen und letztlich dort - wieder im Wesentlichen längs aneinanderliegend - die andersseitige Mantelplatte 23 mit ihren Ausnehmungen 5 im Wesentlichen abdecken.

Die Führungskanäle 35 für die Walzen 6 sind durch die einander gegenüberliegenden Innenflächen 310 der Flankenplatten - Überstände 31 und durch die im Wesentlichen an deren jeweils oberen Rand angeordneten, jeweils aufeinander zu ragenden Deckstreifen 32 und die; die Endscheiben 61 der Walzen 6 hinter- bzw. übergreifenden Profilstreifen 33 gebildet.

In der Fig. 1 ist weiters gezeigt, wie in einer Ausnehmung 50 der Scheitelplatte 22 hier insgesamt drei Sperrzapfen 8 eingesteckt sind, durch welche es für den Hund zuerst einmal unmöglich gemacht ist, auch nur zu einer der Ausnehmungen 5 in der schrägen Mantelplatte 21 mit einer unterhalb derselben auf deren Boden 52 platzierten, von ihm durch die schmalen Spalten zwischen den aneinanderliegenden Walzen 6 von vornherein schon problemlos zu riechenden Fressbelohnung 9 zu gelangen. Er ist gezwungen, zuerst einmal die - hier sogar drei - Sperrzapfen 8 z.B. mit einer seiner Pfoten zu "räumen", um erst danach die Walzen 6 über die Scheitelfläche 22 z.B. einzeln bzw. zu mehrt auf bzw. über die Gegen- Mantelfläche 23 verschieben zu können, um sich letztlich Zugang zu der zumindest einen Ausnehmung 5 und zu der in bzw. unterhalb der selben angeordneten von ihm schon längst geruchserfassten Fressbelohnung 9 zu verschaffen.

Zu ergänzen ist hier noch, dass einer der drei Sperrzapfen 8 in der länglichen Ausnehmung 50 der Scheitelplatte 22 einen zentralen, axial-durchlaufenden Riechkanal 81 aufweist, durch den der Geruch einer unter dem Sperrzapfen 8 in einer von demselben gesperrten Ausnehmung 5 angeordneten Fressbelohnung 9 für den Hund geruchserfassbar ist und ihn anregt, zu der darunter angeordneten Fressbelohnung zu gelangen.

Mit im Wesentlichen ähnlicher Funktion sind jeweils in den Flankenplatten 3 etwa bumerangförmige solche Ausnehmungen 50" eingearbeitet, wobei sichtseitig ein Sperrzapfen 8 an einer Stelle angeordnet ist, wo er von der Hinterschneidung der Ausnehmung 50" festgehalten ist, und wobei erst durch Verschiebung des Sperrzapfens 8 in deren kreisartige Erweiterung 51" ohne Hinterschneidung der Sperrzapfen 8 aus seiner Halterung mittels der Ausnehmung 50" vom Hund zu befreien ist.

Was die Fig. 1 im Zusammenhang mit den Sperrzapfen 8 in den analog zur Ausnehmung 50 gebauten linear-länglichen Ausnehmungen 50' der Grundplatte 10 betrifft, so dient einer der vorderseitigen dazu, eine in die Flankenplatte 3 eingeschobene Lade 34 mit Ausziehschlaufe 36, in welcher Lade 34 sich eine Fressbelohnung 9 befindet, die selbstverständlich vom Hund ebenfalls riecherfassbar ist, an ihrer Herausziehbarkeit zu hindern.

Der Hund muss zuerst den Sperrzapfen 8 vom Hinterschneidungsteil 51' der Ausnehmung 50' unterhalb dessen eine Fressbelohnung angeordnet ist, welche den Hund motiviert, entfernen und kann erst dann die Lade 34 mittels ihrer Schlaufe 36 herausziehen, um zu einer von ihm schon lange vorher geruchs-erfassten, weiteren, dort eingelegten Fressbelohnung zu gelangen.

Dies gilt im Wesentlichen für alle länglichen Ausnehmungen 5, 50, 50', 50" mit Erweiterungen 5', 51, 51', 51".

Die Fig. 1a zeigt - bei sonst gleichbleibenden Bezugszeichenbedeutungen - bloß skizzenartig einen etwa abgerundeten Prismenkörper 20 mit einheitlicher Mantelplatte und deren an die Stelle der Mantelplatten 21, 23 und der Scheitelplatte 22 gemäß Fig. 1 tretenden entsprechenden Mantelplattenabschnitten 21', 22', 23'.

Die Explosionsdarstellung der Fig. 2 zeigt - bei sonst gleichbleibenden Bezugszeichenbedeutungen - eine Ausführungsform des neuen Hundespielzeugs 100 und zwar den Prismenkörper 20. mit der Grundplatte 10 mit den die hier kreisrunden Ausnehmungen 5 für die Platzierung zumindest einer Fressbelohnung 9 aufweisenden Mantelplatten 21, 23 und der dieselben miteinander verbindenden Scheitelplatte 22 sowie den beiden Flankenplatten 3.

Unterhalb zumindest einer der Ausnehmungen 5 kann eine Fressbelohnung 9 für den Hund eingelegt werden.

Auf der Scheitelplatte 22 ist eine längliche Zapfen-Aufnahmeausnehmung 50 mit Hinterschneidung und Kreisrund- Erweiterung 51 angeordnet, in deren Hinterschneidungsbereichen ein oder mehrere Sperrzapfen 8 - an seiner/ihrer Entfernbarkeit gehindert - unterbringbar ist/sind.

Wenn der Hund einen der Sperrzapfen 8 bis in die dortige Kreis- Erweiterung 51 hinverschiebt, welche keine Hinterschneidung aufweist, dann kann er diesen Sperrzapfen 8 letztlich entfernen und auf diese Weise die Verschiebung der Walzen 6 von der Mantelplatte 21 über die Scheitelplatte 22 hinweg auf bzw. über die andere Mantelplatte 23 auf der anderen Seite ermöglichen und auf diese Weise die Mantelplatte 21 und deren Ausnehmungen 5 freilegen.

Die Fig. 2 zeigt weiters die Deckstreifen 32, welche jeweils vom oberen Rand der Flankenplatten 3 auf einander zu nach innen ragen, so wie die Hinterschneidungsstreifen 33, welche an den Deckstreifen 32 nach abwärts weisend befestigt sind und so gemeinsam mit den Überstands-Innenflächen 310 der Flankenplatten 3 jeweils einen Hinterschneidungskanal 35 bilden, in welchen mit den beiden Endplatten 61 die einzeln verschiebbaren Walzen 6 beidseitig "einhängbar" und dort verschiebeführbar sind.

Die Fig. 2 zeigt letztlich auch die unteren Abstandshalter 37, an den Innenseiten der schon oben beschriebenen Hinterschneidungsstreifen 32 welche dafür Sorge tragen, dass die jeweils unterste der Walzen 6 im Abstand a oberhalb der Grundplatte 10 gehalten ist, sodass sie für die Verschiebung der darüber angeordneten Walzen 6 nach oben für die Hundepfote "untergreifbar" ist.

Aus der Draufsicht der Fig. 3 sind - bei sonst gleichbleibenden Bezugszeichenbedeutungen - ganz klar die Mantelplatten 21, 23 mit den verschiedenen, längliche und kreisrunde Formen, aufweisenden Ausnehmungen 5 ersichtlich, welche beidseitig durch die Flankenplatten 3 mit den Deckstreifen 32 begrenzt sind. Die länglichen Ausnehmungen 5 sind mit Hinterschneidungen, mittels welchen die Sperrzapfen 8 in den Ausnehmungen 5 gehalten werden können ausgebildet. An den Erweiterungen 5' fehlen diese Hinterschneidungen und von dort können die Sperrzapfen 8 entfernt werden, sodass dann ein dort eingelegtes "Leckerli" für den Hund erreichbar ist.

Des weiteren ist in der Fig. 3 die Bodenplatte 10 mit den Hintergreifungs-Ausnehmungen 50' und deren nicht hintergreifenden Kreis-Erweiterungen 51' gezeigt, in welchen Ausnehmungen 50' die Sperrzapfen 8 nicht herausziehbar fixiert werden können.

Die Fig. 4 zeigt - bei sonst gleichbleibenden Bezugszeichenbedeutungen - das neue Hundespielzeug 100 in Ansicht von vorne, mit der Grundplatte 10, der von ihr schräg aufsteigenden Mantelplatte 21 mit ihren verschiedene längliche und kreisrunde Formen aufweisenden Ausnehmungen 5, unterhalb welchen vom Hund auffindbare und z.B. mittels seiner Zunge aufnehmbare, ihm zu Gute kommende und ihn voll motivierende Fressbelohnungen 9 anordenbar sind, und den beiden Flankenplatten 3 mit deren die beiden Führungskanäle 35 begrenzenden bzw. deckenden Deckstreifen 32.

Deutlich sichtbar sind in dieser Figur die unterhalb der Ausnehmungen 5 angeordneten Böden 52, auf welchen die Fressbelohnungen 9 anordenbar sind.

Die Fig. 5 zeigt - bei sonst gleichbleibenden Bezugszeichenbedeutungen - das neue Hundespielzeug 100 mit den sowohl in den Aufnahmeausnehmungen 50, 50', 50" als auch in den "versperrbaren" Ausnehmungen 5 der Mantelplatte 23 angeordneten Sperrzapfen 8.

Nachdem der Hund vorerst die drei Sperrzapfen aus der Zapfen-Aufnahmeausnehmung 50 entfernt hat, kann er erst die nicht sichtbaren Walzen über die Scheitelplatte 22 und die Mantelplatte 23 schieben.

Der in die Ausnehmung 5 der Mantelplatte 23 eingesteckte Sperrzapfen 8 verhindert jedoch ein vollständiges Abwärtsrollen aller von der anderen Seite des Prismenkörpers 20 her vom Hund verschobenen bzw. herüber gewälzten Walzen 6.

Er muss also den Sperrzapfen 8 aus der dortigen Ausnehmung 5 entfernen, und findet in dieser eine erste Fressbelohnung.

Immer noch, kann beispielsweise eine der Walzen 6 eine Ausnehmung 5 der Mantelplatte 21 auf der anderen Seite des Prismenkörpers 20 versperren und damit ein darunter eingelegtes "Leckerli" unzugänglich halten.

Der Hund ist nach Entfernung des soeben genannten Sperrzapfens 8 dann, wenn er schon so intelligent ist, im Stande, alle Walzen 6 von der anders-hier rückseitigen Mantelplatte 21 über die Scheitelplatte 22 zu verschieben, wodurch er die bisher durch zumindest eine der Walzen 6 versperrte Ausnehmung 5 in der Mantelplatte 21 öffnet und dort - ein zweites Mal belohnt - zu dem unterhalb derselben platzierten "Lerckerli" 9 gelangt.

Dieses Beispiel zeigt eine besonderes hohe Leistungskompetenz des Hundes auf, welcher dafür entsprechend hoch belohnt wird.

Das neue Spielzeug ist ein anspruchsvolles Intelligenzspiel für mittelgroße und große Hunde.

Das Spiel kann von einfach (Schwierigkeitsgrad 1 Pfote) bis sehr schwierig (4 Pfoten) gestaltet werden. Es bietet eine Vielfalt von Hindernissen, die der Hund lösen muss, um zu den versteckten Belohnungen zu gelangen. Das Spiel trainiert die Konzentration und die Geschicklichkeit eines Hundes und fördert seine natürlichen Instinkte, insbesondere Neugierde, Spieltrieb und Geruchsinn. Durch die vielen Gestaltungsmöglichkeiten kann das neue Spiel sowohl für Anfänger als auch für Fortgeschrittene eingesetzt werden.

Es gibt bei diesem Spiel bis zu 27 verschiedene Verstecke, die der Hund entdecken kann nämlich, das sind Sperrzapfen 8 mit überstehenden "unteren" Erweiterungen, welche mit Hinterschneidungen der Ausnehmungen 5', 50, 50', 50" kooperieren, 9 Zapfen, 2 Schubladen und 6 Walzen.

Es ist empfehlenswert, am Anfang das Spiel nur mit den Walzen 6 zu beginnen, und zwar ohne Blockade der Ausnehmungen 50 der Scheitelplatte 22. Der Hund könnte sonst die Motivation verlieren, wenn er nach einigen Versuchen das Spiel nicht lösen kann. Man lässt den Hund zuschauen, während die Leckerlis im Spiel versteckt werden, so wird seine Neugierde geweckt. Es wird ihm gezeigt, wie das Spiel funktioniert. So kann man sicherstellen, dass der Hund Freude am gemeinsamen Spielen hat und die Aufgabe richtig löst. Dadurch wird das Selbstbewusstsein des Hunds gestärkt.

Am besten ist es, den Hund nie unbeobachtet spielen zu lassen und einzugreifen, wenn er beginnt, das Spiel zu zerbeißen oder dergleichen.

Das neue Spielzeug besteht günstiger Weise aus FSC-zertifiziertem Holz, das mit einer Schicht durchsichtigen und für Mensch und Tier unschädlichen Wasserlacks überzogen. Es trägt wesentlich dazu bei, dass der Hund eine sinnvolle und artgerechte Beschäftigung erhält, die seine natürlichen Instinkte fördert. Die Bindung zwischen Hund und Besitzerln wird gestärkt und viele bekannt gewordene Verhaltensstörungen können dadurch beseitigt werden.

## Patentansprüche

1. Spielzeug zur Förderung der natürlichen Instinkte, wie insbesondere Geruchssinn und Neugierde sowie der Intelligenz von Hunden, umfassend einen Korpus, in den kleinstückige, wohlschmeckende, fressbare Belohnungen für den Hund, so genannte Leckerlis (9) einbringbar sind, wobei
- auf einer ebenen Grundplatte (10) ein hohler, mit Platten gebildeter Prismenkörper (20) mit im Wesentlichen dreieck-, trapez- oder zylindersegment-förmigem Querschnitt angeordnet ist, dessen von der Grundplatte (10) schräg aufsteigende Mantelplatten (21, 23) und Scheitelplatte (22) oder Mantelplattenabschnitte (21', 22', 23') jeweils mit zumindest einer dieselben durchsetzenden Ausnehmung (5, 50) ausgebildet sind, unterhalb welcher sich eine von ihr beabstandete Auflagefläche bzw. ein derartiger Boden (52) befindet, auf welcher bzw. welchem eine vom Hund geschätzte und erreichbare Fressbelohnung bzw. "Leckerli" (9) platzierbar ist, dass
- der Prismenkörper (20) beidseitig durch vertikale, zueinander parallele, dessen Mantelplatten oder Mantelplattenabschnitte mit durchgehend konstanter Überstands-Höhe überragende Flankenplatten (3) begrenzt ist, deren einander zugekehrte Überstands-Innenflächen (310) jeweils mit einem zumindest im Wesentlichen dem Verlauf der Außenfläche der Mantelplatten bzw. der Mantelplattenabschnitte folgenden Führungskanal (35) ausgestattet ist, in welche beiden Führungskanäle (35), jeweils mit ihren beiden Endbereichen (61) hinein ragend, eine Mehrzahl von - eine/n der Mantelplatten (21, 23) bzw. Scheitelplatte (22) oder Mantelplattenabschnitte (21', 22', 23') und hiermit die dort vorhandene zumindest eine Ausnehmung (5, 50) im Wesentlichen abdeckenden -, längs aneinander liegend angeordneten Stäbe, Stangen oder Walzen (6), angeordnet sind, welche von dem die Fressbelohnung (9) riechenden Hund einzeln oder zu mehrt unter Freilegung der zumindest einen Ausnehmung (5) und der sich darunter befindlichen und damit zugänglichen Fressbelohnung (9) über die den Scheitel des Prismenkörpers bildende Mantelplatte, also über die Scheitelplatte (22) oder den Scheitelplattenabschnitt (22') hinweg auf bzw. über die oder den jeweils andersseitigen Mantelplatten (23, 21) oder Mantelplattenabschnitt (23', 21') verbringbar, insbesondere verschiebbar sind.

2. Spielzeug nach Anspruch 1 **dadurch gekennzeichnet, dass** die Führungskanäle (35) als jeweils in die Überstands-Innenflächen (310) der Flankenplatten (3) eingetiefte, der Außen-Kontur der beiden Mantelplatten (21, 23) und der Scheitelplatte (22) oder Mantelplattenabschnitte (21', 22' 23') über die Scheitelplatte (22) oder den Scheitelplattenabschnitt (22') im Wesentlichen folgende, kontinuierliche Führungsrinnen ausgebildet sind, in welche mit ihren jeweils beiden Enden oder endständigen, insbesondere kreisrunden, Querschnitt aufweisenden, Führungszapfen (8) oder dgl. die Stäbe, Stangen, insbesondere Walzen (6) hineinragen und darin führbar sind.

3. Spielzeug nach Anspruch 1 oder Anspruch 2, **dadurch gekennzeichnet, dass** die beiden Führungskanäle (35) mit den beiden einander zugekehrten Überstands-Innenflächen (310) der Flankenplatten (3) und den dieselben rand-begrenzenden, an die Außenränder der Flankenplatten (3) angeschlossenen Deckstreifen (32) mit Hintergreifungsprofilstreifen (33) ausgebildet sind, und dass die Stäbe, Stangen, insbesondere Walzen (6) an ihren beiden Enden (61) mit jeweils in die so gebildeten Führungskanäle (35) eingreifenden und direkt an der Mantelaußenfläche des Prismenkörpers (20) abstützenden, kreisrunden Endscheiben für ihre Führung ausgestattet sind.

4. Spielzeug nach einem der Ansprüche 1 bis 3, **dadurch gekennzeichnet, dass** die Führungskanäle (35) bzw. Führungsrinnen für die Stäbe, Stangen, insbesondere Walzen (6) beidseitig in einem Abstand (a) von der Grundplatte (10) endend ausgebildet sind, womit der/die jeweils unterste derselben in einem - vom das Spielzeug benutzenden Hund, beispielsweise mit seiner Pfote untergreifbaren - Abstand von der Grundplatte (10) gehalten ist.

5. Spielzeug nach einem der Ansprüche 1 bis4 **dadurch gekennzeichnet, dass** die Stäbe, Stangen, insbesondere Walzen (6) in einer Anzahl vorhanden sind, dass sie bei ihrem Längs-Aneinanderliegen eine der beiden schrägen Prismenkörper-Mantelplatten (21, 23) bzw. Mantelplattenabschnitte (21', 23') und somit die dort jeweils vorhandenen Ausnehmungen (5) im Wesentlichen abdecken.

6. Spielzeug nach einem der Ansprüche 1 bis 5, **dadurch gekennzeichnet, dass** die Stäbe, Stangen, insbesondere Walzen (6) selbst entweder kreisrunden oder mehr-, insbesondere zumindest achteckigen Querschnitt aufweisen.

7. Spielzeug nach einem der Ansprüche 1 und 3 bis 6 **dadurch gekennzeichnet, dass** die Führungsrinnen über ihren gesamten Verlauf gleichbleibende Breite, Tiefe und Querschnittsform aufweisen.

8. Spielzeug nach einem der Ansprüche 1 und 3 bis 7 **dadurch gekennzeichnet, dass** die Führungsrinnen im Wesentlichen Rechteck- oder Halbkreisform aufweisenden Querschnitt besitzen.

9. Spielzeug nach einem der Ansprüche 1 bis8 **dadurch gekennzeichnet, dass** es zusätzlich zumindest einen profilierten, gegebenenfalls mit ihn voll durchsetzendem zentralem Riechkanal (81) ausgestatteten, Sperr- Zapfen bzw. -Knubbel (8) umfasst, mittels welchem die zumindest eine, eine Fressbelohnung beherbergende Ausnehmung (5) in den Mantelplatten verschließbar ist und dadurch die Stäbe, Stangen oder Walzen verbringblockierbar, insbesondere verschiebeblockierbar sind, womit der Sperrzapfen (8) vom Hund zuerst zu entfernen ist, um danach die Stangen, Stäbe, insbesondere Walzen (6) zur Freilegung der zumindest einen, die Fressbelohnung enthaltenden Ausnehmung (5) von ihr weg verschieben zu können.

10. Spielzeug nach einem der Ansprüche 1 bis 9 **dadurch gekennzeichnet, dass** es zusätzlich zwei, jeweils aus den Flankenplatten (3), beispielsweise mittels Schlaufe (36), herausziehbare, ebenfalls mit einer Fressbelohnung (9) befüllbare Laden (34) aufweist, welche mittels - in Zapfen-Aufnahme-Ausnehmungen (50') in der Grundplatte (10) platzier- bzw. einsteckbaren und aus diesen lösbaren - Sperr- Zapfen bzw. -Knubbeln (8) blockierbar sind, wobei erst nach deren Entfernung durch den Hund die Laden (34) herausziehbar sind und somit die darin gelagerte Fressbelohnung (9) für denselben zugänglich ist.

11. Spielzeug nach Anspruch 10 **dadurch gekennzeichnet, dass** die Zapfen-Aufnahme-Ausnehmungen (50, 50', 50") in der Grundplatte (10), in der Scheitelplatte (22) und/oder in den Flankenplatten (3) mit Hinterschneidungen zum Festhalten der in dieselben eingreifenden Sperr- Zapfen bzw. -Knubbel (8) ausgebildet sind und jeweils nur ein begrenzter Bereich (51, 51', 51") dieser Zapfen-Aufnahme-Ausnehmungen (50, 50', 50") hinterschneidungsfrei ist, wobei erst nach Verschieben des Sperr-Zapfens bzw. - Knubbels (8) dorthin, derselbe durch den Hund entfernbar und somit die jeweilige Lade (34) aus der Flankenplatte (3) herausziehbar und eine sich darin befindliche Fressbelohnung (9) für denselben zugänglich ist.

## Claims

1. A toy for promoting natural instincts, in particular scent, curiosity and the intelligence of dogs, comprising a body, into which small-sized, tasty, edible rewards for the dog, so-called treats (9) can be introduced, wherein
- a hollow prism body (20) formed with panels and having a substantially triangular, trapezoidal or cylindrical segment-shaped cross section is arranged on a flat base panel (10), lateral panels (21, 23) and an apex panel (22) or lateral panel sections (21', 22', 23') of said cross section which rise obliquely from the base panel (10) being designed in each case with at least one aperture (5, 50) which passes through same and below which there is a support surface spaced apart therefrom or such a base (52) on which a food reward or "treat" (9) which is valued and can be reached by the dog can be placed, that
- the prism body (20) is delimited on both sides by vertical, mutually parallel flank panels (3) which project beyond the lateral panels or lateral panel sections thereof with consistently constant protrusion height, the mutually facing protrusion inner surfaces (310) of said flank panels each being provided with a guide channel (35) following at least substantially the course of the outer surface of the lateral panels or of the lateral panel sections, into which two guide channels (35) a plurality of rods, bars or rollers (6) are arranged so as to each project therein with the two end regions (61) thereof, longitudinally abut one another and thus substantially covert least one of the lateral panels (21, 23) or apex panel (22) or lateral panel sections (21', 22', 23') and thus the at least one aperture (5, 50) present there, and can be moved, in particular slid, individually or together onto or over the lateral panels (23, 21) or lateral panel section (23', 21') on the other side, beyond the lateral panel forming the apex of the prism body, i.e. beyond the apex panel (22) or the apex panel section (22'), by the dog smelling the food reward (9) so as to expose the at least one aperture (5) and the food reward (9) disposed therebelow and thus accessible.

2. The toy according to claim 1, **characterised in that** the guide channels (35) are each designed as continuous guide grooves which are recessed in the protrusion inner surfaces (310) of the flank panels (3) and which substantially follow the outer contour of the two lateral panels (21, 23) and the apex panel (22) or lateral panel sections (21', 22' 23') via the apex panel (22) or the apex panel section (22') and into which the rods, bars, in particular rollers (6), protrude, each with their two ends or terminal guide pins (8) or the like having in particular circular cross section, and can be guided therein.

3. The toy according to claim 1 or claim 2, **characterised in that** the two guide channels (35) with the two mutually facing protrusion inner surfaces (310) of the flank panels (3) and the same edge-delimiting cover strips (32) connected to the outer edges of the flank panels (3) are designed with rear-engagement profile strips (33), and that the rods, bars, in particular rollers (6), at both ends (61) thereof are provided for their guidance in each case with circular end plates which engage in the guide channels (35) thus formed and which are supported directly on the lateral outer surface of the prism body (20).

4. The toy according to one of claims 1 to 3, **characterised in that** the guide channels (35) or guide grooves for the rods, bars, in particular rollers (6), are designed so as to terminate on both sides at a distance from the base panel (10), as a result of which the lowest thereof in each case is held at a distance from the base panel (10) which can be reached from below, for example by a paw of the dog using the toy.

5. The toy according to any one of claims 1 to 4, **characterised in that** the rods, bars, in particular rollers (6) are present in a number such that they, in their longitudinal abutment, substantially cover one of the two oblique prism body lateral panels (21, 23) or lateral panel sections (21', 23') and thus the apertures (5) present there in each case.

6. The toy according to any one of claims 1 to 5, **characterised in that** the rods, bars, in particular rollers (6), themselves have either circular or polygonal, in particular at least octagonal, cross section.

7. The toy according to any one of claims 1 and 3 to 6, **characterised in that** the guide grooves over their entire course have constant width, depth and cross-sectional shape.

8. The toy according to any one of claims 1 and 3 to 7, **characterised in that** the guide grooves have a cross section which has a substantially rectangular or semi-circular shape.

9. The toy according to one of claims 1 to 8, **characterised in that** it additionally comprises at least one profiled locking pin or knob (8), provided optionally with a central smell channel (81) passing therethrough, by means of which the at least one aperture (5) accommodating a food reward can be closed in the lateral panels and thereby the rods, bars or rollers can be locked from moving, in particular can be blocked from sliding, as a result of which the locking pin (8) first has to be removed by the dog in order to then be able to slide the bars, rods, in particular rollers (6), away from the aperture, in particular to expose the at least one aperture (5) containing the food reward.

10. The toy according to one of claims 1 to 9, **characterised in that** it additionally comprises two drawers (34), which can each be pulled out of the flank panels (3), for example by means of a strap (36), can be filled with a food reward (9) and which can be blocked by means of locking pins or knobs (8) that can be placed or inserted in pin-receiving apertures (50') in the base panel (10) and released therefrom, wherein only after their removal by the dog can the drawers (34) be pulled out and is the food reward (9) stored therein thus accessible to same.

11. The toy according to claim 10, **characterised in that** the pin-receiving apertures (50, 50', 50") in the base panel (10), in the apex panel (22) and/or in the flank panels (3) are designed with undercuts for holding the locking pins or knobs (8) engaging therein, and only a limited region (51, 51', 51") of said pin-receiving apertures (50, 50', 50") is free of undercuts, wherein only after sliding the locking pin or knob (8) thereto can same be removed by the dog and thus can the drawer (34) be pulled out of the flank panel (3) and is the food reward (9) therein accessible to said dog.

## Revendications

1. Jouet destiné à promouvoir les instincts naturels, en particulier l'odorat et la curiosité et l'intelligence de chiens, comprenant un corps dans lequel peuvent être introduites des récompenses de petite taille, savoureuses et comestibles, pour le chien, appelées friandises (9), dans lequel
- sur une plaque de base plate (10), un prisme creux, faisant corps avec la plaque (20) est agencé avec une section transversale sensiblement triangulaire, trapézoïdale ou cylindrique, des plaques d'enveloppe (21, 23) et une plaque de sommet (22) s'élevant obliquement depuis la plaque de base (10) ou des sections de plaque d'enveloppe (21', 22', 23') étant chacune formées avec au moins un même évidement traversant (5, 50), en dessous duquel se trouve une surface de support distante de celui-ci ou un fond (52), sur lequel une récompense ou une "friandise" (9) appréciable et pouvant être atteinte par un chien peut être placée, de manière à ce que
- le corps de prisme (20) est limité des deux côtés par des plaques de flancs (3) verticales et parallèles l'une à l'autre, dépassant les plaques d'enveloppe ou les sections de plaque d'enveloppe avec une hauteur de surplomb constante, les plaques de flanc étant dotées de surfaces intérieures de surplomb se faisant face (310), ayant chacune un canal de guidage (35) suivant au moins sensiblement le contour de la surface extérieure de la plaque d'enveloppe ou de la section de plaque d'enveloppe, où les deux canaux de guidage (35) font saillie avec leurs deux zones d'extrémité (61), où une pluralité de barreaux, tiges ou rouleaux (6) juxtaposés au plan longitudinal sont agencés, pour sensiblement couvrir une des plaques d'enveloppe (21, 23) ou la plaque de sommet (22) ou les sections de plaque d'enveloppe (21', 22', 23') et ainsi l'au moins un évidement (5, 50) présent dans celle-ci, lesquels peuvent être transférés, en particulier déplacés par le chien qui sent la récompense (9), individuellement ou à plusieurs pour libérer l'au moins un évidement (5) et la récompense (9) se trouvant en dessous et la rendre ainsi accessible par la plaque d'enveloppe formant le sommet du corps de prisme, également par la plaque de sommet (22) ou les sections de plaque de sommet (22') ou par la ou les plaques d'enveloppe (23, 21) ou sections de plaque d'enveloppe (23', 21') sur des côtés différents.

2. Jouet selon la revendication 1, **caractérisé en ce que** les canaux de guidage (35) sont formés comme rainures de guidage continues, créées dans la surface intérieure de surplomb (310) des plaques de flanc (3), suivant sensiblement le contour extérieur des deux plaques d'enveloppe (21, 23) et de la plaque de sommet (22) ou des sections de plaque d'enveloppe (21', 22', 23') au-dessus de la plaque de sommet (22) ou la section de plaque de sommet (22'), dans lesquelles pénètrent par leurs deux extrémités respectives les broches de guidage (8) présentant une section transversale en particulier circulaire aux extrémités ou les barreaux, tiges ou en particulier rouleaux (6) et peuvent y être guidés.

3. Jouet selon la revendication 1 ou la revendication 2, **caractérisé en ce que** les deux canaux de guidage (35) avec les deux surfaces intérieures de surplomb (310) se faisant face des plaques de flanc (3) et des bandes de recouvrement (32) limitant le même bord, reliées sur les bords extérieurs des plaques de flanc (3), sont formés avec des bandes de profils d'engagement (33) et **en ce que** les barreaux, les tiges, en particulier les rouleaux (6) s'engagent par leurs deux extrémités (61) dans les canaux de guidage ainsi formés (35) et sont équipés de disques terminaux circulaires reposant sur la surface extérieure d'enveloppe du corps de prisme (20) pour leur guidage.

4. Jouet selon l'une des revendications 1 à 3, **caractérisé en ce que** les canaux de guidage (35) ou rainures de guidage pour les barreaux, les tiges, en particulier les rouleaux (6), sont formés des deux côtés pour se terminer à distance de la plaque de base (10), de sorte que l'on conserve la distance à la plaque de base (10) la plus faible pour qu'elle puisse être à portée du chien utilisant le jouet, par exemple, avec sa patte.

5. Jouet selon l'une des revendications 1 à 4, **caractérisé en ce que** les barreaux, tiges, en particulier les rouleaux (6) sont présents en un nombre tel que lorsqu'ils sont juxtaposés au plan longitudinal, ils couvrent l'une des deux plaques d'enveloppe obliques (21, 23) du corps de prisme ou les sections de plaque d'enveloppe (21', 23') et ainsi sensiblement les évidements existants respectifs (5).

6. Jouet selon l'une des revendications 1 à 5, **caractérisé en ce que** les barreaux, les tiges, en particulier les rouleaux (6) eux-mêmes ont une section transversale ronde, ou en particulier au moins octogonale.

7. Jouet selon l'une des revendications 1 et 3 à 6, **caractérisé en ce que** les rainures de guidage présentent sur toute leur course une largeur, une profondeur et une forme de section transversale constantes.

8. Jouet selon l'une des revendications 1 et 3 à 7, **caractérisé en ce que** les rainures de guidage ont une section transversale de forme sensiblement rectangulaire ou semi-circulaire.

9. Jouet selon l'une des revendications 1 à 8, **caractérisé en ce qu'**il comporte en outre au moins un canal olfactif central (81) profilé, éventuellement intercalé, équipé, d'une goupille ou broche de verrouillage (8), par l'intermédiaire de laquelle au moins un évidement (5) recevant une récompense peut être fermé dans les plaques d'enveloppe et ainsi les barreaux, les tiges ou les rouleaux peuvent être bloqués, en particulier contre tout déplacement, moyennant quoi la goupille de verrouillage (8) doit d'abord retirée par le chien pour ensuite pouvoir déplacer les barreaux, les tiges, en particulier les rouleaux (6) et exposer l'au moins un évidement (5) contenant la récompense.

10. Jouet selon l'une des revendications 1 à 9, **caractérisé en ce qu'**il comprend en outre deux réserves (34) pouvant être chargées d'une friandise (9), pouvant être retirée de la plaque de flanc (3), par exemple au moyen d'une boucle (36), qui peuvent être bloquées par une goupille ou broche de verrouillage (8) pouvant être placée ou insérée dans des évidements de réception de goupille (50') dans la plaque de base (10) et sortie de ceux-ci, de sorte que les réserves (34) ne puissent être retirées qu'après leur retrait par le chien et que la récompense (9) qui y est stockée soit ainsi accessible.

11. Jouet selon la revendication 10, **caractérisé en ce que** les évidements de réception de goupille (50, 50', 50") sont formés dans la plaque de base (10), dans la plaque de sommet (22) et/ou dans les plaques de flanc (3) avec des contre-dépouilles pour le maintien dans la même goupille ou broche de verrouillage (8) et seule une zone limitée (51, 51', 51") de ces évidements de réception de goupilles (50, 50', 50") est dégagée, où seulement après y avoir déplacé la goupille ou broche de verrouillage (8), celles-ci peuvent être retirées par le chien et la réserve correspondante (34) de la plaque de flanc (3) tirée et la friandise (9) située à l'intérieur de celle-ci est accessible pour le chien.
